# EUROPÄISCHE PATENTSCHRIFT

(11) **EP 3 868 641 B1**
(45) Veröffentlichungstag und Bekanntmachung des Hinweises auf die Patenterteilung: **30.08.2023**
(21) Anmeldenummer: 21020077.0
(22) Anmeldetag: 17.02.2021
(51) Int. Cl.: B62M 9/12

(54) **FAHRRAD-HINTERRAD-RITZELANORDNUNG SOWIE BAUKASTENSYSTEM ZUR ERZEUGUNG VON FAHRRAD-HINTERRAD-RITZELANORDNUNGEN**
BICYCLE REAR WHEEL PINION ASSEMBLY AND MODULAR SYSTEM FOR PRODUCING BICYCLE REAR WHEEL PINION ASSEMBLIES
DISPOSITIF DE PIGNONS ARRIÈRE DE BICYCLETTE, AINSI QUE SYSTÈME MODULAIRE DESTINÉ À LA PRODUCTION DE DISPOSITIFS DE PIGNONS ARRIÈRE DE BICYCLETTE

(30) Priorität: 22.02.2020 DE 102020001147; 29.01.2021 DE 102021000448
(43) Veröffentlichungstag der Anmeldung: 25.08.2021
(73) Patentinhaber: SRAM Deutschland GmbH, 97424 Schweinfurt (DE)
(72) Erfinder: Vonend, Andreas, 97421 Schweinfurt (DE); Rohmer, Jakob, 97070 Würzburg (DE)

(56) Entgegenhaltungen:
- EP-A1- 3 507 183
- DE-A1-102017 008 074
- DE-A1-102018 133 324
- Luke Jack: "Rotor 1x13 hydraulic groupset: weights, price, specs, details", bikeradar.com, 25. Februar 2019 (2019-02-25), XP055816441, Gefunden im Internet: URL:https://www.bikeradar.com/features/rot or-1x13-hydraulic-groupset-weights-price-s pecs-details/ [gefunden am 2021-06-22] & Unknown: "Rotor 1x13", , 1. Juni 2019 (2019-06-01), XP055816508, Gefunden im Internet: URL:https://acs-vertrieb.de/wp-content/upl oads/2019/06/ROTOR-1x13-ROAD-EN.pdf [gefunden am 2021-06-22]

## Beschreibung

Die vorliegende Erfindung betrifft eine Ritzelanordnung für ein Hinterrad eines Fahrrads nach dem Oberbegriff von Anspruch 1.

Gattungsgemäße Hinterrad-Ritzelanordnungen, in der Fahrradbranche und in der nachfolgenden Beschreibung auch vereinfacht und synonym bezeichnet als Ritzelkassette oder Kassette, bilden am Fahrrad einen Bestandteil des Antriebsstrangs, welcher der Übertragung der Antriebskraft vom Kettenblatt am Fahrrad-Tretlager zum Hinterrad dient.

In der nachfolgenden Beschreibung verwendete Orts- bzw. Richtungsangaben wie "links", "rechts", "vorne", "hinten", "oben", "unten" usw. entsprechen der Fahrerperspektive auf einem Fahrrad. Entsprechendes gilt für die in der Beschreibung verwendeten branchenüblichen Richtungsangaben "Inboard" (links bzw. nach links) und "Outboard" (rechts bzw. nach rechts), welche sich spezifisch auf Schaltvorgänge bzw. Ritzelpositionen an der Kassette beziehen.

Fahrrad-Ritzelkassetten umfassen eine Mehrzahl an hinterachs-axial beabstandeten Ritzeln mit gestuft unterschiedlicher Zähnezahl. Die Fahrradkette wird je nach der vom Fahrer gewählten Übersetzung mittels eines Schaltwerks auf eines der Ritzel gelegt, und bestimmt somit im Zusammenwirken mit der Zähnezahl des Kettenblatts am Tretlager die Übersetzung und die vom Fahrer gewünschte Trittfrequenz.

In den letzten Jahren ist die Fahrradbranche vor allem im Bereich der Mountainbikes dazu übergegangen, die Anzahl der Tretlager-Kettenblätter von traditionell drei unterschiedlich großen Kettenblättern zunächst auf zwei Kettenblätter, und zwischenzeitlich auf zumeist nur noch ein einziges Kettenblatt zu reduzieren, zumindest in gehobenen Marktsegmenten. Dies vereinfacht den Antriebsstrang und erhöht dessen Zuverlässigkeit Auch wird hierdurch für den Fahrer die auf nur noch einen Schalthebel reduzierte Schaltbetätigung und Schaltlogik vereinfacht.

Weiterhin entfallen damit auch der vordere Kettenwerfer im Bereich des Tretlagers ebenso wie dessen Ansteuerung und die zu dessen Befestigung notwendigen Einrichtungen am Fahrradrahmen und Fahrradlenker. Mit dem Entfall von Umwerfer, zusätzlichen Kettenblättern sowie Schalthebel und Zubehör ist auch eine erhebliche Gewichtsreduzierung des Fahrrads verbunden.

Auch bei Fahrrädern mit elektrischem Zusatzantrieb wird u.a. aus Baumraumgründen sowie zur Vereinfachung des Antriebsstrangs in den meisten Fällen auf mehrere schaltbare Kettenblätter verzichtet, und auf nur noch ein Kettenblatt gesetzt.

Mit dem Entfall desjenigen Teilfaktors des Übersetzungsbereichs am Fahrrad, welcher in der Vergangenheit durch mehrere Kettenblätter am Tretlager bereitgestellt wurde, und der typischerweise im Bereich von 180 bis 200 % lag, wurde es erforderlich, den von der Ritzelkassette bereitgestellten Übersetzungsbereich wesentlich zu vergrößern.

Diese Notwendigkeit hat zur Entwicklung von Ritzelkassetten geführt, die sowohl outboardseitig sehr kleine Ritzel bis herab zu 11 Zähnen und weniger, als auch inboardseitig sehr große Ritzel bis hinauf zu 50 Zähnen und mehr aufweisen. Damit kommen diese Kassetten auf Übersetzungsbereiche in der Größenordnung von 500 %, und können somit in nahezu allen Fahrsituationen eine geeignete Übersetzung bereitstellen.

Ritzelkassetten mit inboardseitig derart großen Ritzeln führen jedoch unter anderen zu Gewichtsproblemen, insbesondere wenn die Kassetten sich in traditioneller Weise zum großen Teil aus einzelnen scheibenförmigen Ritzeln zusammensetzen, wobei jedes Ritzel direkt auf dem Freilauf-Antreiber der Hinterradnabe angeordnet ist.

Das hohe Gewicht derartiger Ritzelkassetten ergibt sich einerseits durch die vor allem in Richtung Inboard sehr groß werdenden scheibenförmigen Ritzel (die vereinfacht auch als Steckritzel bezeichnet werden) und andererseits durch die mit dem Einzelritzel-Aufbau verbundenen Redundanzen bezüglich der Drehmomentübertragung von den radial außenliegenden Ritzelzähnen auf den radial innenliegenden Antreiber der Hinterradnabe. Diese Redundanzen bestehen vor allem darin, dass jedes Einzelritzel seinen eigenen Drehmoment-Übertragungsweg von der radial außenliegenden Ritzelverzahnung zum radial innenliegenden Antreiber bildet, was sich zu einer Vielzahl von parallel nebeneinander angeordneten und damit redundanten Drehmoment-Übertragungswegen mit entsprechend hohem Materialaufwand addiert.

Um insbesondere der Gewichtsproblematik solcher Ritzelkassetten zu begegnen, wurden bisher zwei grundlegende Haupt-Konzepte verfolgt. Eines dieser Konzepte liegt im Einsatz von sogenannten Ritzel-Spidern, bei denen mehrere benachbarte Ritzelringe auf einem gemeinsamen Träger angeordnet sind.

Ein Ritzelring definiert sich dabei dadurch, dass dieser, anders als ein scheibenförmiges Kassettenritzel bzw. Steckritzel, nicht direkt auf dem Antreiber der Hinterradnabe angeordnet und mit diesem drehmomentübertragend verbunden, sondern als radial vergleichsweise schmaler Ring ausgebildet ist.

Die Verbindung mit dem Antreiber sowie die Drehmomentübertragung von der Ritzelverzahnung auf den Antreiber erfolgt bei Ritzelkassetten mit Spider-Aufbau somit jeweils gebündelt für zumeist zwei oder mehrere benachbarte Ritzelringe, welche jeweils zusammen auf einem Spider befestigt sind.

Die große Anzahl an Ritzeln von aktuellen Kassetten im Bereich von typischerweise zehn und mehr Ritzeln führt jedoch zu der Notwendigkeit, entweder eine Mehrzahl relativ flacher Spider vorzusehen und jeweils typischerweise 2 bis 4 Ritzel an jedem der flachen Spider zu befestigen, oder einen einzelnen Ritzelspider dreidimensional mit in Axialrichtung erheblicher Dicke bzw. Ausdehnung auszuführen, um so eine Vielzahl an Ritzelringen nebeneinander auf dem Spider unterbringen zu können.

Diese beiden bekannten Ansätze für Spider-Ritzelkassetten sind damit nicht optimal im Hinblick auf die gewünschte Gewichtsreduzierung, und führen zudem zu einem komplizierten Aufbau der Kassette mit zahlreichen aufwändig zu fertigenden und zu montierenden Baugruppen.

Ein weiteres bekanntes Konzept zur Gewichtsreduktion von Ritzelkassetten mit sehr hohem Übersetzungsbereich liegt darin, die Ritzelkassette zumindest teilweise als selbsttragendes sog. Ritzelcluster, auch bezeichnet als Dom-Kassette, auszubilden. Hierbei werden häufig alle Ritzel außer dem inboardseitig größten Ritzel entweder aus einem Stück Vollmaterial gefräst, oder es werden möglichst viele der zwischen dem größten und dem kleinsten Ritzel befindlichen Zwischenritzel als Ritzelringe ausgebildet, welche durch Verbindungselemente wie Niete oder Stifte miteinander zu einer kegelähnlichen dreidimensionalen Tragstruktur verbunden werden. Die letztgenannte Variante wird in der Branche auch als gepinntes Ritzelcluster bezeichnet.

Allgemein und unabhängig von der Fertigungstechnologie lässt sich ein selbsttragendes Ritzelcluster definieren als bestehend aus drei oder mehr Ritzeln mit einem inboardseitigen Anfangsritzel und einem outboardseitigen Endritzel, wobei Anfangsritzel und Endritzel mit Anschlussbauteilen wie Spider, Trägerritzel bzw. Antreiber verbindbar sind, wohingegen das dritte Ritzel, bzw. üblicherweise mehrere zwischen Anfangsritzel und Endritzel angeordnete Zwischenritzel, freitragend ausgebildet sind, keine eigene bzw. direkte Verbindung mit Spider, Trägerritzel oder Antreiber besitzen, und stattdessen lediglich direkt oder indirekt mit dem Anfangs- und dem Endritzel verbunden sind.

Auch das Konzept des Ritzelclusters stößt mit den immer größeren Gangzahlen und Ritzelgrößen jedoch an Grenzen. Aus dem Vollen gefräste Ritzelcluster benötigen immer aufwändigere und damit teurere Herstellungsschritte, während gepinnte Ritzelcluster aufgrund der Vielzahl von in Reihe angeordneten Pin- bzw. Nietstrukturen einen immer höheren Fertigungsaufwand vor allem durch die damit verbundenen Toleranzketten verursachen. Das Dokument XP055816508, "Rotor 1x13 hydraulic groupset: weights, price, specs, details", offenbart eine bekannte Hinterrad-Ritzelanordnung mit allen Merkmalen des Oberbegriffs des Anspruchs 1.

Ausgehend von dem vorstehend beschriebenen Stand der Technik ist es die Aufgabe der vorliegenden Erfindung, eine Ritzelanordnung bereitzustellen, mit der die beschriebenen Nachteile des Standes der Technik, sowohl hinsichtlich Spider-Kassetten, ebenso wie in Bezug auf Dom-Kassetten, überwunden werden.

Diese Aufgabe wird durch eine Ritzelanordnung mit den Merkmalen des Patentanspruchs 1 bzw. durch ein Baukastensystem mit den Merkmalen von Patentanspruch 5 gelöst.

Bevorzugte Ausführungsformen sind Gegenstand der Unteransprüche.

Gattungsgemäß umfasst die Ritzelanordnung zunächst ein Trägerritzel sowie ein selbsttragendes Ritzelcluster. Das Ritzelcluster ist in einem outboard-seitigen Verbindungsbereich des Trägerritzels mit dem Trägerritzel verbunden.

Die Ritzelanordnung zeichnet sich durch eine Mehrzahl weiterer Ritzel aus, wobei die weiteren Ritzel als Ritzelringe ausgebildet sind. Jeder der Ritzelringe ist dabei in dem Verbindungsbereich des Trägerritzels an dem Trägerritzel angeordnet, und in dem Verbindungsbereich jeweils mit dem Trägerritzel verbunden.

Durch die dergestalt am Trägerritzel angeordneten weiteren Ritzel bzw. Ritzelringe, in Kombination mit dem ebenfalls am Trägerritzel in dessen Verbindungsbereich befestigten Ritzelcluster, ergibt sich der Vorteil, dass das Ritzelcluster auf diese Weise von einer der Anzahl der Ritzelringe entsprechenden Mehrzahl an Ritzeln entlastet wird, bei denen es sich typischerweise um einige der größten Ritzel der Ritzelkassette handelt.

Das Ritzelcluster kann somit bedeutend kleiner ausfallen, wodurch die eingangs beschriebenen Probleme bezüglich Herstellung, Toleranzen und Gewicht des Ritzelclusters maßgeblich reduziert werden. Da das Volumen eines Kegels, welcher sowohl im Durchmesser als auch proportional in der Höhe verkleinert wird, mit der dritten Potenz der Verkleinerung fällt, kann auf diese Weise schon durch eine Reduktion des Außendurchmesser und der Breite eines typischerweise ungefähr kegelförmigen Ritzelclusters um beispielsweise 30% das Volumen des Ritzelclusters größenordnungsmäßig auf nahezu ein Drittel reduziert werden.

Die Ritzelringe können dabei auf unterschiedliche Weise mit dem Trägerritzel verbunden werden. Erfindungsgemäß ist zumin-dest einer der Ritzelringe mittels einer Mehrzahl von Verbindungselementen mit dem Trägerritzel verbunden. Bei den Verbindungselementen handelt es sich beispielsweise um Schrauben, Niete, Pins oder um Clinch-Verbindungen, bei letzteren also um formschlüssige Verbindungen mittels Durchsetzfügen ohne Verwendung eines Zusatzwerkstoffes.

Auch die Pins, im Fall einer Pin-Verbindung mit dem Trägerritzel, können entweder zusätzlich zu dem jeweiligen Ritzelring vorgesehen werden, oder einstückig mit dem Ritzelring ausgebildet, beispielsweise angeformt sein.

Nach einer weiteren bevorzugten Ausführungsform ist zumindest einer der Ritzelringe stoffschlüssig mit dem Trägerritzel verbunden, also beispielsweise durch Schweißen oder Kleben.

Die vorgenannten Ausführungsformen lassen sich auch miteinander kombinieren, so dass einer der Ritzelringe beispielsweise mit dem Trägerritzel verklebt sein kann, während ein weiterer Ritzelring beispielsweise mit dem Trägerritzel verpinnt oder vernietet ist. Auch eine Kombination mehrerer Verfahren an derselben Verbindungsstelle eines Ritzelrings mit dem Trägerritzel ist denkbar und vorgesehen, insbesondere eine Kombination aus Stoffschluss und Formschluss, wie beispielsweise eine durch Formschlusselemente wie Rändel oder Vorsprünge verstärkte Klebeverbindung.

Ähnliches gilt für die Verbindung zwischen Trägerritzel und Ritzelcluster. Auch diese kann durch Verbindungselemente wie die vorgenannten, durch stoffschlüssige Verbindung, oder durch eine Kombination dieser Verbindungsmethoden erfolgen.

Eine besonders bevorzugte Ausführungsform sieht vor, dass das Trägerritzel geschüsselt ausgebildet ist dergestalt, dass in dem Verbindungsbereich des Trägerritzels mit den Ritzelringen eine dortige Querschnittskontur des Trägerritzels der Zahnspitzenkontur der Ritzelanordnung im Sinne einer Parallelkurve näherungsweise parallel folgt.

Dies kann beispielsweise dadurch erreicht werden, dass das Trägerritzel zumindest bereichsweise ähnlich eines Torus-Abschnitts ausgebildet ist. Diese Formgebung führt im Verbindungsbereich zwischen Trägerritzel, Ritzelringen und Ritzelcluster aufgrund kürzester Verbindungswege zu minimiertem Materialaufwand und damit zu dem angestrebten möglichst geringen Gewicht der Ritzelkassette.

Ferner lassen sich durch diese kürzesten Verbindungswege auch Steifigkeit und Dauerfestigkeit der Ritzelanordnung im Verbindungsbereich optimieren.

Gemäß einer weiteren bevorzugten Ausführungsform weist an einem oder mehreren Ritzeln der Ritzelanordnung die Lastflanke zumindest eines Außenlaschen-Raumgebezahns bzw. Abgabezahns eine in Umfangsrichtung zurückgenommene, abgeschrägte Haifischzahn-Gestalt auf. Hierdurch lässt sich die Schaltpräzision über die gesamte Lebensdauer der Ritzelkassette verbessern, Schaltgeräusche können reduziert werden, der Verschleiß von Ritzelkassette und Kette wird verringert, und insgesamt erhöht sich die Lebensdauer des Antriebsstrangs.

Die Erfindung betrifft ferner ein Baukastensystem zur Bereitstellung einer Vielzahl unterschiedlicher Fahrrad-Hinterrad-Ritzelanordnungen. Das Baukastensystem umfasst zumindest eine Baugruppenserie für zumindest eine der Baugruppen "Trägerritzel", "Ritzelcluster" und "Ritzelringe", vorzugsweise jeweils eine Baugruppenserie für jede dieser Baugruppen.

Am Beispiel des Trägerritzels soll unter einer "Baugruppenserie" eine Serie bzw. Reihe von Trägerritzeln aus unterschiedlichen Materialien oder von unterschiedlicher Fertigungsqualität verstanden werden. Beispielsweise begründen ein Trägerritzel aus Stahl und ein Trägerritzel aus Aluminium eine Baugruppenserie "Trägerritzel".

Dabei sind innerhalb jeder Baugruppenserie jeweils Verbindungs-Schnittstellen mit den anderen Baugruppen (also am Beispiel des Trägerritzels die Verbindungs-Schnittstellen mit einem der Ritzelringe, oder die Verbindungs-Schnittstellen mit dem Ritzelcluster) formkorrespondierend einheitlich bzw. mechanisch übereinstimmend definiert. Dies bedeutet, dass anhand der einheitlich definierten Verbindungs-Schnittstellen die jeweilige Baugruppe (beispielsweise das Trägerritzel) unter Beibehaltung der restlichen Baugruppen (beispielsweise der Ritzelringe und des Ritzelclusters) gegen eine andere Baugruppe (beispielsweise gegen ein anderes Trägerritzel) aus derselben Baugruppenserie (beispielsweise aus der Baugruppenserie "Trägerritzel") austauschbar ist.

Nach einer möglichen Ausführungsform ist dabei zumindest eine der Verbindungs-Schnittstellen des Trägerritzels als Kombinations-Schnittstelle zur wahlweisen Aufnahme eines Ritzelrings oder eines Ritzelclusters ausgebildet. Dies bedeutet mit anderen Worten, dass sich an der entsprechenden Kombinations-Schnittstelle des Trägerritzels entweder ein größeres Ritzelcluster befestigen lässt (wobei eine weitere, radial weiter innenliegende Verbindungs-Schnittstelle dann ungenutzt bleiben kann), oder es wird an der Kombinations-Schnittstelle ein Ritzelring befestigt, während an der weiteren, radial weiter innenliegenden Verbindungs-Schnittstelle ein kleineres Ritzelcluster befestigt wird.

Nachfolgend werden Ausführungsformen der Erfindung anhand der Figuren beispielhaft beschrieben.

Es zeigen:
- Fig. 1:: ein Mountainbike mit 1-fach-Antriebsstrang, also mit einem einzigen Kettenblatt und ohne vorderen Kettenwerfer;
- Fig. 2-4:: eine Ritzelanordnung mit Ritzelspider und Steckritzeln nach dem Stand der Technik jeweils in schematischer Schnittdarstellung;
- Fig. 5:: eine Ritzelanordnung mit einstückigem Ritzelcluster nach dem Stand der Technik in schematischer Schnittdarstellung;
- Fig. 6:: eine Ritzelanordnung mit gepinntem Ritzelcluster nach dem Stand der Technik in schematischer Schnittdarstellung;
- Fig. 7-8:: eine Ritzelanordnung nach einer Ausführungsform der Erfindung jeweils in schematischer Schnittdarstellung;
- Fig. 9:: eine schematische Überlagerung der Ritzelanordnung nach dem Stand der Technik gemäß Fig. 6 mit dem Trägerritzel der Ausführungsform gemäß Fig. 7 und 8;
- Fig. 10:: die Ausführungsform gemäß Fig. 7 und 8 in einer Darstellung zur Verdeutlichung des Baukastensystems in schematischer Schnittdarstellung;
- Fig. 11:: ein Ausführungsbeispiel der Ritzelanordnung mit einstückigem Ritzelcluster und verpinnten Ritzelringen in schematischer Schnittdarstellung;
- Fig. 12:: das Ausführungsbeispiel gemäß Fig. 11 in einer Explosionsdarstellung;
- Fig. 13:: das Trägerritzel einer weiteren Ausführungsform in einer Ansicht von links bzw. von outboard;
- Fig. 14:: das Trägerritzel gemäß Fig. 13 in einer Schrägansicht von links bzw. von outboard;
- Fig. 15:: eine Ausschnittsdarstellung des Trägerritzels gemäß Fig. 13 und 14;
- Fig. 16:: das Trägerritzel gemäß Fig. 13 bis 15 in einer Schnittdarstellung;
- Fig. 17:: den Schnittverlauf durch das Trägerritzel gemäß Fig. 16;
- Fig. 18:: den Verlauf des Ketten-Lasttrums beim Outboard-Schalten vom Trägerritzel auf das nächstkleinere Ritzel; und
- Fig. 19:: eine Outboard-Schaltgasse des Trägerritzels mit der zugehörigen Verzahnungsgeometrie.

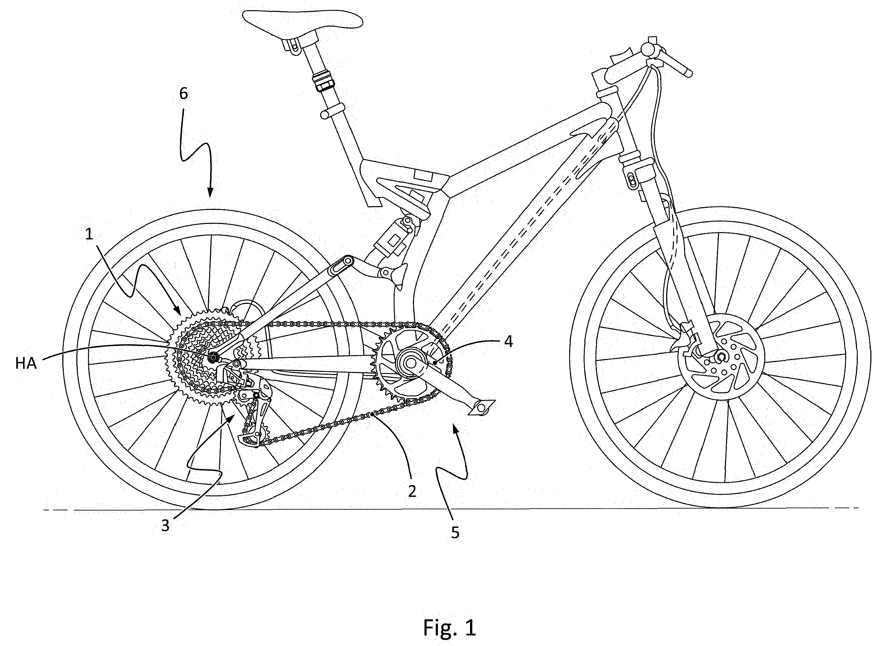

Fig. 1 zeigt ein Mountainbike mit einem 1-fach-Antriebsstrang. Der Antriebsstrang umfasst neben Ritzelkassette 1, Kette 2 und Schaltwerk 3 lediglich ein einziges Kettenblatt 4. Wie eingangs beschrieben, vereinfacht sich hierdurch der Antriebsstrang sowohl hinsichtlich Herstellungs-, Montage- und Einstellaufwand ebenso wie in Bezug auf Gewicht und hinsichtlich der Schaltbedienung durch den Fahrer.

Der durch den Wegfall weiterer Kettenblätter mit anderer Zähnezahl entfallende Übersetzungsbereich muss dabei durch einen entsprechend vergrößerten Übersetzungsbereich der Ritzelkassette 1 ausgeglichen werden.

Dies erfolgt insbesondere dadurch, dass die Ritzelkassette 1 einige extrem große Ritzel auf der Inboard-Seite aufweist. Die Inboard-Seite entspricht in Fig. 1 zeichnungsbezogen der Rückseite der Ritzelkassette 1. Es ist erkennbar, dass das größte Ritzel der Ritzelkassette 1 einen erheblich größeren Durchmesser und damit eine erheblich größere Zähnezahl als das Kettenblatt 4 aufweist. Auf diese Weise wird die für steile Anstiege erforderliche Untersetzung, also ein Übersetzungsverhältnis kleiner als 1 zwischen Kurbeltrieb 5 und Hinterrad 6 bereitgestellt.

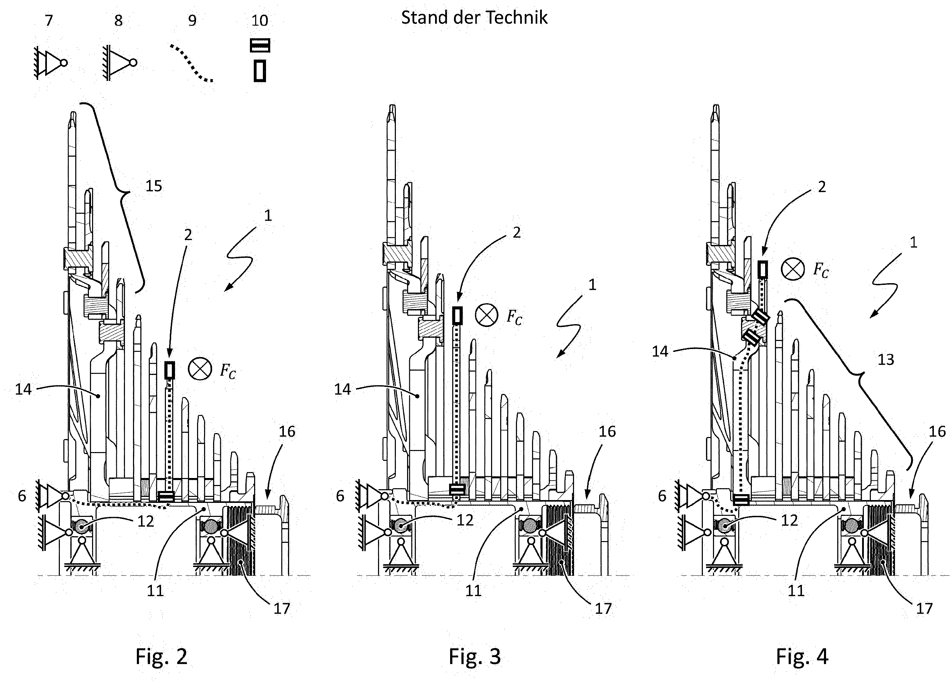

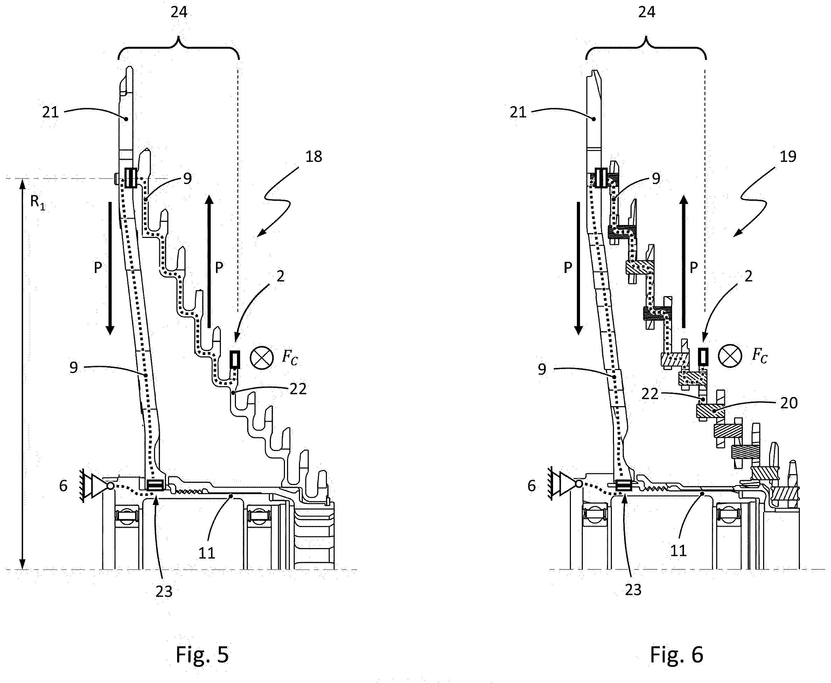

Fig. 2 bis 4 zeigen eine Fahrrad-Ritzelkassette gemäß Stand der Technik, jeweils in einem Axialschnitt durch die Hinterachse eines Fahrrads gemäß Fig. 1. Die in Fig. 2 bis 4 und auch teilweise in Fig. 5 bis 8 verwendeten Symbole sind im oberen Bereich von Fig. 2 nochmals in Form einer Legende dargestellt.

Dabei steht das Symbol 7 für die drehmomentfeste Verbindung zwischen dem Antreiber 11 der Ritzelkassette 1 über einen (nicht dargestellten) Freilauf auf ein Hinterrad gemäß Fig. 1, das Symbol 8 jeweils für eine translatorische Fixierung des Antreibers 11 über dessen Lagerungen 12 gegenüber der Fahrrad-Hinterachse, die punktierte Linie gemäß Symbol 9 steht für einen Kraft- bzw. Momentfluss, hier von der Kette 2 durch die Ritzelkassette 1 auf das Hinterrad bei 6, und die beiden Blockformen 10 stehen für kraftübertragende Schnittstellen zwischen den verschiedenen Baugruppen der Ritzelkassette 1, bzw. für den Angriff der hier in die Zeichnungsebene hinein weisenden Kettenkraft Fc.

Die Ritzelkassette 1 gemäß Fig. 2 bis 4 umfasst eine Mehrzahl von hier acht als Steckritzel 13 ausgebildeter Einzelritzel sowie einen Ritzelspider 14, auf dem als Ritzelringe 15 ausgebildete weitere vier Einzelritzel angeordnet sind. Die Steckritzel 13 sowie der Ritzelspider 14 werden mittels eines Lockrings 16, welcher in ein Innengewinde 17 des Antreibers 11 einschraubbar ist, in üblicher Weise auf dem Antreiber 11 axial verspannt.

Eine Zusammenschau von Fig. 2 bis 4 verdeutlicht die beim Stand der Technik vorhandenen Redundanzen bezüglich der Drehmomentübertragung von der Fahrradkette 2 über die Ritzel 13, 15 auf den Antreiber 11. Man erkennt, dass innerhalb der Ritzelkassette nicht weniger als neun radiale Übertragungswege 9 für das Drehmoment bestehen, da jedes der acht Steckritzel 13 sowie zudem der Ritzelspider 14 jeweils einen eigenen radialen Drehmoment-Übertragungsweg 9 von der jeweiligen Ritzelverzahnung zum Antreiber aufweist.

Somit ergibt sich die Vielzahl von hier neun parallel nebeneinander angeordneten, jedoch nur alternativ genutzten und damit redundanten Drehmoment-Übertragungswegen 9, mit entsprechend hohem Materialaufwand und damit hohem Gewicht der Ritzelkassette 1.

im Unterschied zu der Ritzelkassette mit Steckritzeln und Ritzelspider nach dem Stand der Technik gemäß Fig. 2 bis 4 zeigen Fig. 5 und 6 Beispiele für Ritzelkassetten aus dem Stand der Technik, die als Ritzelcluster aufgebaut sind. Dabei umfasst die Ritzelkassette gemäß Fig. 5 ein aus einem Stück Vollmaterial gefrästes Ritzelcluster 18, während es sich bei der Ritzelkassette gemäß Fig. 6 um ein gepinntes Ritzelcluster 19 handelt, welches sich also aus einer Vielzahl von hier mittels Pins 20 verbundener Einzelritzel zusammensetzt. In beiden Fällen ist das Ritzelcluster 19 bzw. 20 jeweils mit einem Trägerritzel 21 verbunden.

In Zusammenschau mit Fig. 1 wird aus Fig. 5 und 6 einerseits erkennbar, welche enorme Größe die Ritzelcluster bei solchen aus dem Stand der Technik bekannten Ritzelkassetten inzwischen erreicht haben. Aufgrunddessen ergibt sich bei den aus Vollmaterial gefrästen Clustern gemäß Fig. 5 ein sehr hoher Herstellungsaufwand und damit entsprechend hohe Kosten, während gepinnte Cluster wie in Fig. 6 besonders aufgrund der Vielzahl in Reihe angeordneter Verbindungsstrukturen, hier nicht weniger als 10 zwischen den 11 Cluster-Ritzeln angeordneter Pin-Ebenen mit jeweils einer Vielzahl von Pins 20, große Herausforderungen hinsichtlich der Einhaltung axialer und radialer Rundlauftoleranzen an die Produktion stellen.

Die in Fig. 5 und 6 ebenfalls eingezeichneten Kraft- bzw. Momentflüsse 9 dienen der Verdeutlichung eines weiteren Nachteils bei diesem Stand der Technik. Insbesondere bei Ritzelkassetten für die am Mountainbike ebenso wie am e-Bike üblich gewordenen 1-fach-Antriebe ähnlich Fig. 1 werden die mittelgroßen Ritzel im mittleren Bereich der Kassette weitaus häufiger genutzt als die linksseitigen großen und sehr großen Ritzel, bzw. als die rechtsseitigen kleinen und sehr kleinen Ritzel.

Als Beispiel für ein besonders häufig genutztes Ritzel ist in Fig. 5 und 6 die Kette bei 2 auf das Ritzel 22 des siebten Gangs aufgelegt (in der üblichen Weise von Inboard=links nach Outboard=rechts gezählt). Man erkennt, dass der Kraftfluss 9 von dem aktuell genutzten Ritzel 22 über alle weiter links vom Ritzel 22 befindlichen Ritzel zuerst nach radial weit außen geleitet wird, und sodann über das Trägerritzel 21 einen noch weiteren Weg wieder nach radial innen bis zur Schnittstelle 23 des Trägerritzels 21 mit dem Antreiber 11 zurücklegen muss, vgl. die Pfeile P in Fig. 5 und 6.

Dieser lange Weg des Kraftflusses 9 ist keineswegs nur geometrisch zu sehen, sondern führt im Betrieb zu einer tatsächlichen Dauer- bzw. Wechselbelastung aller von dem Kraftfluss 9 überstrichenen Bereiche 24 des Ritzelclusters 18, 19 einschließlich des Trägerritzels 21.

Die vom Kraftfluss 9 somit in nahezu allen eingelegten Gängen überstrichenen, links vom aktuell jeweils genutzten Ritzel befindlichen Bereiche 24 müssen damit hinsichtlich Materialermüdung bzw. Dauerfestigkeit auf diese permanente Wechselbelastung insbesondere hinsichtlich Umlaufbiegung ausgelegt werden, anstelle nur im Hinblick auf die Belastung im Fall der viel selteneren tatsächlichen Nutzung der im Bereich 24 befindlichen Gänge bzw. Ritzel ausgelegt werden zu können. Auch diese beim Stand der Technik erforderliche Auslegung führt somit zu unerwünschtem Gewichtszuwachs der Ritzelkassette.

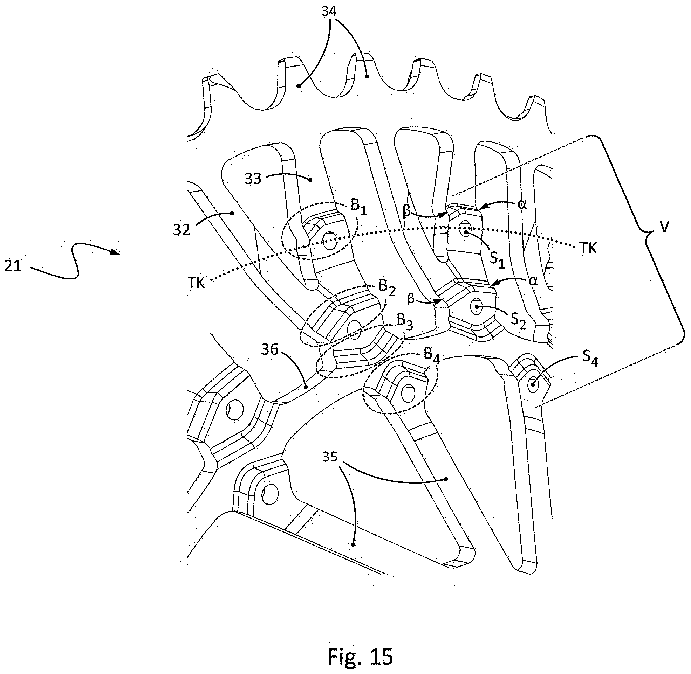

Auf den in Fig. 5 eingezeichneten Abstützradius R₁ wird weiter unten bei der Beschreibung zu Fig. 15 eingegangen.

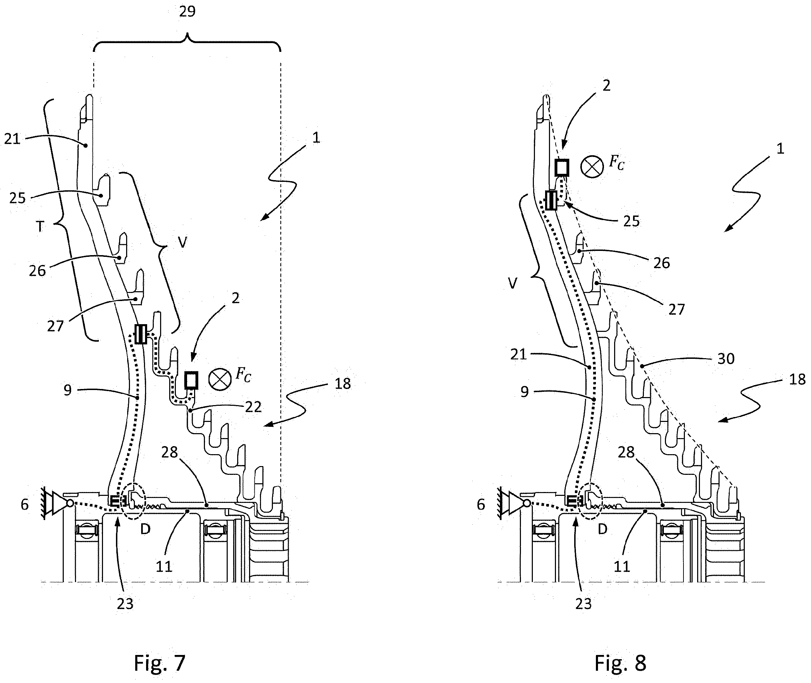

Fig. 7 zeigt eine Ritzelkassette bzw. Ritzelanordnung 1 nach einer Ausführungsform der Erfindung, in einer Fig. 5 und 6 entsprechenden Situation, und wieder mit eingezeichnetem Kraftfluss 9. Hierbei ist die Kette 2 wie in Fig. 5 und 6 wieder auf das siebte Ritzel 22 aufgelegt, entsprechend dem siebten Gang der Ritzelkassette 1.

Fig. 8 zeigt dieselbe Ritzelanordnung 1 wie Fig. 7 mit dem Unterschied, dass die Kette 2 hier auf das zweite Ritzel 25 aufgelegt ist, entsprechend dem zweiten Gang der Ritzelkassette 1. Dementsprechend zeigt Fig. 8 den im zweiten Gang auftretenden Kraftfluss von der Kette 2 über das zweite Ritzel bzw. den Ritzelring 25 auf das Trägerritzel 21, von diesem auf den Antreiber 11, und schlussendlich wieder bei 6 auf das Hinterrad.

Außer dem Trägerritzel 21 erkennt man in Fig. 7 und 8 ein (hier einstückig gefrästes) Ritzelcluster 18 sowie eine Mehrzahl (hier drei) als Ritzelringe 25, 26 und 27 ausgebildeter weiterer Ritzel, welche in einem Verbindungsbereich V des Trägerritzels 21 mit dem Trägerritzel 21 verbunden sind.

Es wird deutlich, dass das Ritzelcluster 18, im Vergleich beispielsweise zu der Ritzelkassette nach dem Stand der Technik gemäß Fig. 5, um die drei großen Ritzel 25 bis 27 reduziert bzw. verkleinert ist. Da die Form des Ritzelclusters 18 im wesentlichen einem Kegelstumpf entspricht, ergibt sich beim dargestellten Ausführungsbeispiel durch die erhebliche Verkleinerung sowohl im Durchmesser als auch in der Höhe eine Reduktion des Volumens des Ritzelclusters um nahezu zwei Drittel, mit entsprechend großen Vorteilen bezüglich Herstellbarkeit und Herstellungskosten. Auch die Masse des Ritzelclusters wird auf diese Weise entscheidend verringert.

Anstelle eines gefrästen Ritzelclusters 18 wie bei der Ausführungsform gemäß Fig. 7 und 8 kann für eine weitere vorgesehene (nicht dargestellte) Ausführungsform wahlweise auch ein gepinntes Ritzelcluster (vgl. Fig. 6) verwendet und mit einem Trägerritzel gemäß Fig. 7 und 8 verbunden werden.

Anhand einer Zusammenschau von Fig. 7 und 8 mit Fig. 6 wird erkennbar, dass sich die bei gepinnten Clustern gemäß Fig. 6 im Stand der Technik vorhandene Problematik der langen Toleranzketten aufgrund der zahlreichen Pin-Ebenen zwischen den Cluster-Ritzeln durch das verkleinerte Cluster maßgeblich reduzieren lässt. Insbesondere bei gepinnten Clustern ergibt sich auf diese Weise bei vertretbarem Herstellungsaufwand eine Ritzelkassette mit deutlich verbessertem Rundlauf sowie höherer Steifigkeit.

Besonders beim Einsatz eines gepinnten Clusters (vgl. Fig. 6), in etwas geringerem Maß auch bei einem Fräscluster gemäß Fig. 7 und 8, ergibt sich aufgrund der mit dem kleineren Cluster reduzierten Toleranzketten auch eine Verbesserung der axiaten Toleranzsituation der gesamten Ritzelkassette 1.

Dies äußert sich dadurch, dass mit der Erfindung der zur spielfreien Montage der Ritzelkassette 1 unter axialer Vorspannung notwendige Differenzspalt D zwischen den für die axiale Toleranzkette relevanten axialen Abmessungen von Locktube 28, Antreiber 11 und Trägerritzel 21 reduziert werden kann. Hierdurch werden auch die aus der axialen Verspannung der Kassette bei deren Montage, bei welcher der axiale Differenzspalt 1 geschlossen wird, resultierenden Änderungen der Frontflächenabstände 29 der Zahngeometrie verringert, wodurch sich die Schaltpräzision der Kassette verbessert.

Eine Zusammenschau von Fig. 7 mit Fig. 5 ergibt, auf welche Weise der Kraftfluss 9 mit der Erfindung gegenüber dem Stand der Technik verbessert und verkürzt wird. Beim Ausführungsbeispiel gemäß Fig. 7 und 8 äußert sich dies dadurch, dass die drei großen Ritzel 25 bis 27, ebenso wie der größte, radial außenliegende Teil T des Trägerritzels 21, im Gegensatz zum Stand der Technik gemäß Fig. 5 aus dem Kraftfluss der am häufigsten benutzten Ritzel im mittleren Bereich der Kassette 1 herausgenommen sind. Somit können diese Bereiche, hier also die Ritzel 25 bis 27 sowie der radial äußere Teil T des Trägerritzels 21, im wesentlichen auf deren eigene im Fahrbetrieb zu erwartende Nutzungshäufigkeit, somit auf eine erheblich geringere Dauerbelastung und mit entsprechend deutlich geringerem Gewicht ausgelegt werden.

Fig. 8 zeigt ferner schematisch die Hüllkurve 30 der Zahnspitzen bzw. Zahnspitzenkontur der in Fig. 7 und 8 dargestellten Ausführungsform der Ritzelkassette 1. Man erkennt, dass die toroidale Wölbung bzw. Schüsselung des Trägerritzels 21 dazu führt, dass eine Querschnittskontur des Trägerritzels 21 im Verbindungsbereich V, in welchem das Trägerritzel 21 mit den Ritzelringen 25 bis 27 sowie mit dem Ritzelcluster 18 verbunden ist, der Zahnspitzenkontur 30 näherungsweise parallel (im Sinne einer Parallelkurve) folgt. Dies führt wie dargestellt zu maximal verkürzten Verbindungswegen und Kraftflüssen zwischen den Ritzelringen 25 bis 27 bzw. zwischen dem Ritzelcluster 18 und dem Trägerritzel 21, und zu dementsprechend minimiertem Materialeinsatz und Gewicht für die Ritzelkassette.

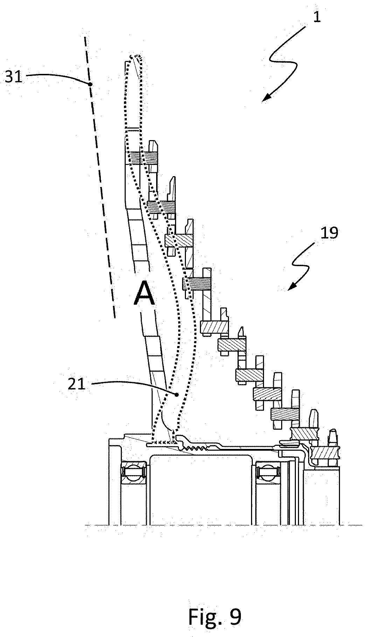

Fig. 9 zeigt schematisch eine grafische Überlagerung des Trägerritzels 21 gemäß der Ausführungsform aus Fig. 7 und 8 mit einer Cluster-Kassette nach dem Stand der Technik gemäß Fig. 6. Das in Fig. 9 gezeigte Prinzip und die damit verbundenen Vorteile gelten ebenso im Vergleich mit einem gefrästen Ritzelcluster 18 nach dem Stand der Technik gemäß Fig. 5.

In Fig. 9 wird erkennbar, dass dank der toroidalen Schüsselung des Trägerritzels 21 Bauraum in erheblichem Maß im Bereich A zwischen den Speichen 31 des Hinterrads 6 (vgl. Fig. 1) und dem Trägerritzel 21 frei wird. Dieser Bauraum lässt sich dementsprechend für andere Baugruppen oder Aufgaben nutzen, beispielsweise für den (nichtdargestellten) rechten Speichenflansch, oder zur Anbringung eines zusätzlichen, gegenüber dem Trägerritzel 21 noch größeren Ritzels der zeichnungsbezogen linken Seite des Trägerrritzels 21, zur weiteren Erhöhung der Gangzahl und des Übersetzungsbereichs der Ritzelkassette 1.

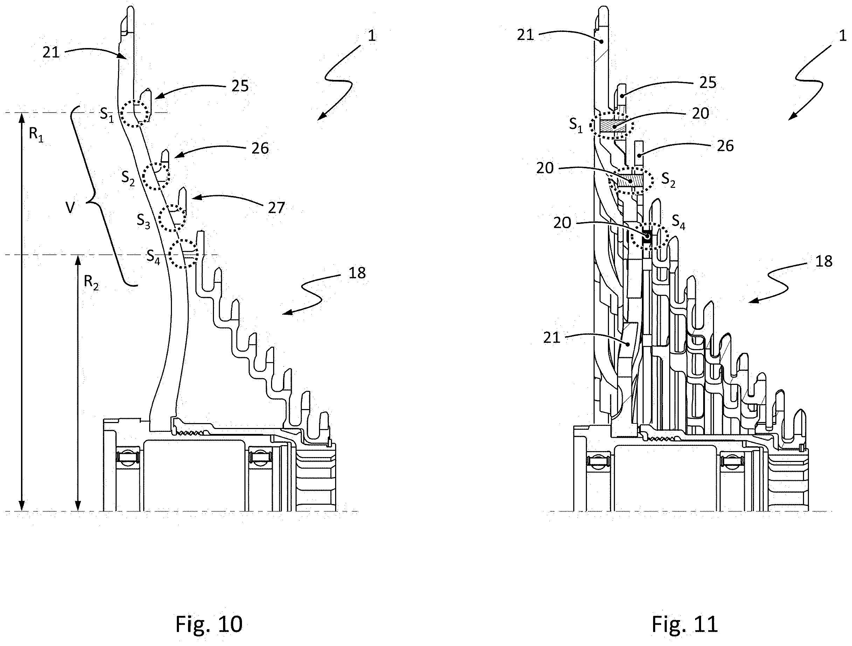

Fig. 10 zeigt schematisch das Prinzip eines Baukastensystems für Ritzelkassetten 1, welches sich mit der Erfindung verwirklichen lässt. Beim gezeigten Ausführungsbeispiel werden hierzu Baugruppenserien für das Trägerritzel 21, für jeden der Ritzelringe 25-27 und für das Ritzelcluster 18 definiert, welche jeweils unterschiedliche Ausführungen, Materialien, Herstellungsformen oder Qualitäten der jeweiligen Baugruppe (also des Trägerritzels 21, jeden der Ritzelringe 25-27 und des Ritzelclusters 18) enthalten können.

Innerhalb jeder Baugruppenserie sind dabei die Schnittstellen S₁ bis S₄ jeweils formkorrespondierend einheitlich bzw. mechanisch übereinstimmend definiert. Dies bedeutet mit anderen Worten, dass innerhalb jeder Baugruppenserie die entsprechende Baugruppe gegen eine Baugruppe aus anderem Material, anderer Herstellungsweise oder anderer Qualität ausgetauscht werden kann, während die anderen Baugruppen unverändert beibehalten werden.

Beispielsweise ist vorgesehen, innerhalb der Baugruppenserie "Trägerritzel" verschiedene Trägerritzel aus unterschiedlichen Materialien bereitzustellen, beispielsweise aus Stahl, Aluminium und Titan, und/oder Trägerritzel mit unterschiedlicher Oberflächenbehandlung. Unter Beibehaltung der restlichen Baugruppen, also der Ritzelringe 25-27 und des Ritzelclusters 18, lässt sich auf diese Weise mit geringem Entwicklungs- sowie Herstellungsaufwand bereits eine Mehrzahl von Ritzelkassetten 1 für unterschiedliche Einsatzzwecke und von unterschiedlicher Qualität bereitstellen.

Dasselbe gilt entsprechend für die anderen bei diesem Ausführungsbeispiel vorhandenen Baugruppen, also für jeden der Ritzelringe 25-27 sowie für das Ritzelcluster 18. Für jede dieser Baugruppen können herstellungsseitig, jeweils unter Beibehaltung aller anderen Baugruppen, entsprechende Baugruppen aus anderem Material oder von anderer Herstellungsweise bzw. anderer Qualität bereitgestellt werden.

Ähnliches gilt auch für die Bauweise des Ritzelclusters 18. Dies bedeutet, dass beispielsweise die Baugruppen "Trägerritzel" und "Ritzelringe" unverändert beibehalten werden, während anstelle des in Fig. 10 und 11 dargestellten einstückig gefrästen Ritzelclusters ein gepinntes Ritzelcluster (vgl. Fig. 6) vorgesehen wird.

Insgesamt ergibt sich mit dem Baukastensystem somit eine Vielzahl an Varianten für die Ritzelkassette 1, die jeweils für unterschiedliche Preis- oder Marktsegmente und für damit verbundene Einsatzzwecke geeignet bzw. optimiert werden können, beispielsweise für den gelegentlichen Freizeiteinsatz in einem ersten Marktbereich bis hin zum sportlichen Extremeinsatz in einem ganz anderen Marktbereich, ohne dass vom Grundaufbau der Ritzelkassette, wie beispielhaft anhand der Ausführungsform gemäß Fig. 10 dargestellt, abgewichen werden muss.

Anhand der schematischen Darstellung in Fig. 10 lässt sich auch eine weitere Ausführungsform des Baukastensystems verdeutlichen, bei dem eine der Verbindungs-Schnittstellen des Trägerritzels 21, hier die Verbindungs-Schnittstelle S₃, als Kombinations-Schnittstelle zur wahlweisen Aufnahme eines Ritzelrings oder eines Ritzelclusters vorgesehen ist.

Dies bedeutet, dass sich an einer solchen Kombinations-Schnittstelle S₃ des Trägerritzels 21 entweder ein Ritzelcluster befestigen lässt, welches im Außendurchmesser größer ist als das in Fig. 10 dargestellte Ritzelcluster 18. Hierbei kann dann die radial weiter innenliegende Verbindungs-Schnittstelle S₄ ungenutzt bleiben. Alternativ kann an der Verbindungs-Schnittstelle S₃ wie abgebildet ein Ritzelring 27, und an der weiteren, radial weiter innenliegenden Verbindungs-Schnittstelle S₄ ein Ritzelcluster 18 wie in Fig. 10 dargestellt befestigt werden.

Anhand Fig. 10 wird ferner erkennbar, dass das Trägerritzel 21 durch die Verbindung mit dem Ritzelcluster 18 im Bereich der Verbindungs-Schnittstelle S₄ zusätzlich erheblich abgestützt bzw. versteift wird, insbesondere im Vergleich mit Ritzelkassetten mit Clusteraufbau gemäß dem Stand der Technik, beispielsweise gemäß Fig. 5 und 6. Damit verbessert sich die Widerstandsfähigkeit des Trägerritzels 21 gegen Versagen besonders durch Beulen bzw. Knicken bei hoher Antriebslast. Entsprechend kann das Trägerritzel 21 reduziert dimensioniert werden, was wieder dem angestrebten geringen Gewicht der Ritzelkassette zugute kommt.

Auf die in Fig. 10 eingezeichneten Abstützradien R₁ und R₂ wird weiter unten bei der Beschreibung zu Fig. 15 eingegangen.

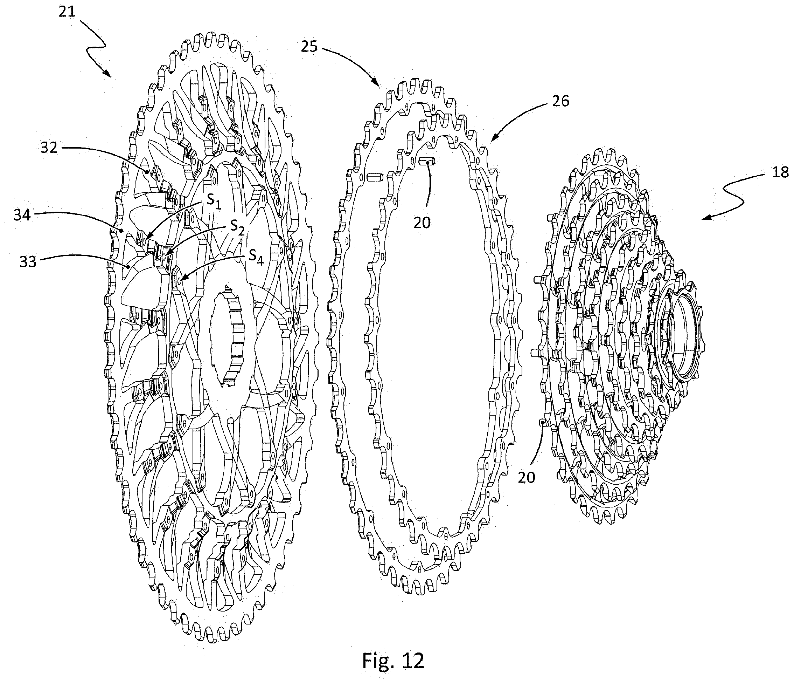

Fig. 11 und 12 zeigen ein Ausführungsbeispiel für eine Ritzelanordnung nach einer Ausführungsform der Erfindung im Axialschnitt (Fig. 11) sowie in einer Explosionsdarstellung (Fig. 12). Dabei handelt es sich um eine Ritzelanordnung mit einstückigem Ritzelcluster 18 und mit Ritzelringen 25, 26, die mit dem Trägerritzel 21 verpinnt sind.

Bei der dargestellten Ausführungsform der Ritzelanordnung bzw. des Baukastensystems sind die Verbindungs-Schnittstellen S₁, S₂ und S₄ für sämtliche hier vorhandenen Baugruppenserien, also für die Baugruppenserie "Trägerritzel 21", für die beiden Baugruppenserien "Ritzelring 25" und "Ritzelring 26" sowie für die Baugruppenserie "Ritzelcluster 18" jeweils in Form einer Vielzahl von Pins 20 definiert, welche jeweils entlang eines gedachten Teilkreises verteilt angeordnet sind.

Man erkennt insbesondere Fig. 12, dass für jede der vorgenannten Baugruppenserien die jeweilige Baugruppe gegen eine Baugruppe aus anderem Material oder von anderer Qualität getauscht werden kann, ohne dass die restlichen Baugruppen geändert oder nennenswert angepasst werden müssen. Beispielsweise kann anstelle des hier aus einem Stück Stahl gefrästen Ritzelclusters 18 ebenso ein gepinntes Ritzelcluster (vgl. Fig. 6) vorgesehen werden, um auf diese Weise eine Ritzelkassette für ein anderes Preis- oder Marktsegment bereitzustellen. Dasselbe gilt für die anderen Baugruppen, also für die Ritzelringe 25 und 26 sowie für das Trägerritzel 21.

Ebenfalls ist in Fig. 12 erkennbar, dass die Ritzelringe 25 und 26 in radialer Richtung mit minimaler Höhe ausgeführt sind, was insbesondere durch die Schüsselung des Trägerritzels 21 ermöglicht wird. Auf diese Weise lässt sich das Gewicht der Ritzelkassette weiter minimieren.

Eine weitere besondere Eigenschaft des Trägerritzels 21 besteht bei dieser Ausführungsform in der Gestaltung der Verbindungsarme 32 und 33, welche hier die Verbindungs-Schnittstellen S₁ und S₂ mit dem Verzahnungsbereich 34 des Trägerritzels 21 verbinden. Man erkennt, dass die Verbindungsarme 32 zwischen dem Verzahnungsbereich 34 und den radial weiter außen liegenden Verbindungs-Schnittstellen S₁ weitestgehend ohne Axialkomponente in Radialrichtung verlaufen, während die Verbindungsarme 33 zwischen dem Verzahnungsbereich 34 und den radial weiter innen liegenden Verbindungs-Schnittstellen S₂ neben einer radialen Verlaufskomponente auch eine Verlaufskomponente in Umfangsrichtung und insbesondere eine Verlaufskomponente in Axialrichtung besitzen. Letztere führt dazu, dass das Trägerritzel 21 im Bereich der Verbindungs-Schnittstellen S₁ und S₂ eine erhöhte Widerstandsfähigkeit gegen unerwünschtes Biegen bzw. Knicken erhält.

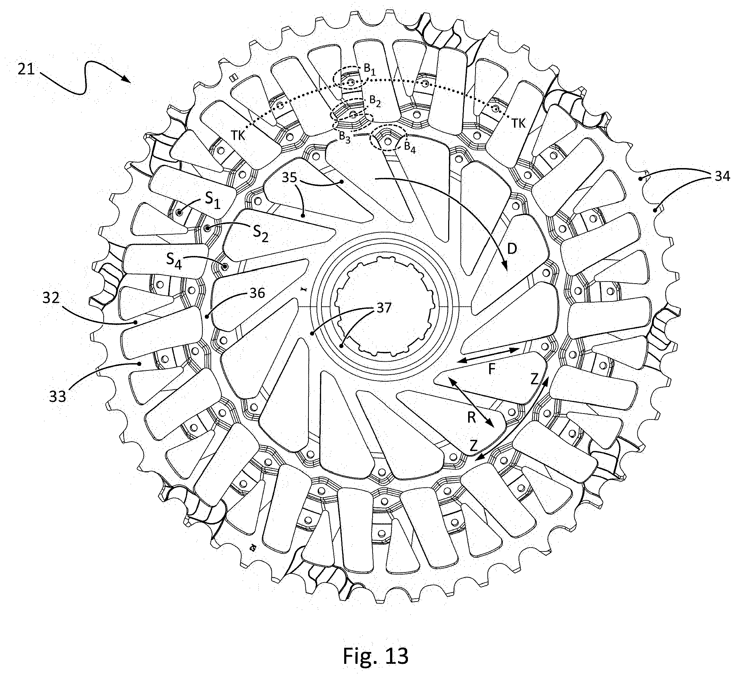

Fig. 13 bis 19 zeigen das Trägerritzel 21 einer weiteren Ausführungsform der Ritzelanordnung. Unterschiede zu der Ausführungsform des Trägerritzels 21 gemäß Fig. 12 bestehen insbesondere in der Ausführung der radial inneren Trägerarme 35, welche hier zunächst einmal nicht wie bei der Ausführungsform gemäß Fig. 12 gekrümmt, sondern geradlinig verlaufen. Weiterhin ist die Anzahl dieser einen Zwischenring 36 des Trägerritzels 21 mit einem Nabenbereich 37 des Trägerritzels 21 verbindenden Trägerarme 35 gegenüber der Ausführungsform gemäß Fig. 12 auf die Hälfte reduziert, da bei der Ausführungsform gemäß Fig. 13 nur noch diejenigen Trägerarme vorhanden sind, welche von radial außen nach radial innen in Drehrichtung D betrachtet vorwärts geneigt verlaufen.

Hierdurch wird einerseits das Gewicht gegenüber der Ausführungsform gemäß Fig. 12 reduziert. Andererseits führt der nur noch vorwärts geneigte Verlauf der Trägerarme 35 bei dem Trägerritzel 21 des Ausführungsbeispiels gemäß Fig. 13 dazu, dass das Trägerritzel 21 durch das von der (hier nicht dargestellten) Kette in Drehrichtung D aufgebrachte Drehmoment zusätzlich versteift wird, indem in den Trägerarmen 35 durch deren Vorwärtsneigung Druckkräfte F hervorgerufen werden.

Eine in Umfangsrichtung bzw. Drehrichtung D verlaufende Umfangskomponente dieser Druckkräfte F in den Trägerarmen 35 überträgt das Antriebsdrehmoment von der Kette über den Verzahnungsbereich 34 sowie über die Verbindungsarme 32, 33 und über den Zwischenring 36 auf den Nabenbereich 37, während eine in Radialrichtung R verlaufende Radialkomponente dieser Druckkräfte F den Zwischenring 36 gegenüber dem Nabenbereich 37 gleichmäßig nach radial außen drückt. Hierdurch wird wiederum eine umlaufende Zugkraft Z in dem Zwischenring 36 erzeugt, welche das Trägerritzel 21 stabilisiert und damit einem seitlichen Ausknicken des Trägerritzels 21 durch insbesondere beim Schräglauf der Kette auftretende Axialkräfte auf den Verzahnungsbereich 34 entgegenwirkt.

Weiterhin in Fig. 13 zu erkennen sind auch die Verbindungs-Schnittstellen S₁ und S₂ zur Verbindung des Trägerritzels 21 mit Ritzelringen 25, 26 und die Verbindungs-Schnittstelle S₄ zur Verbindung des Trägerritzels 21 mit einem Ritzelcluster 18 wie in Fig. 7 und 8 sowie 10 bis 12 dargestellt.

Auf die Bereiche B₁, B₂, B₃ und B₄ des Trägerritzels 21 sowie auf den Teilkreis TK wird weiter unten bei der Beschreibung zu Fig. 15 eingegangen.

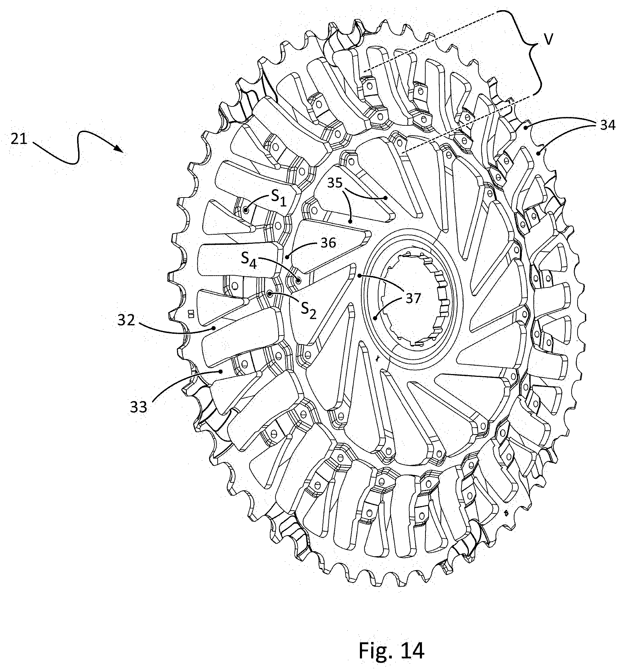

Fig. 14 zeigt das Trägerritzel gemäß Fig. 13 nochmals in einer Schrägansicht von outboard betrachtet. Man erkennt wieder die toroidale Schüsselung des Trägerritzels 21, welche dazu führt, dass eine Querschnittskontur des Trägerritzels 21 im Verbindungsbereich V (vgl. Fig. 7, 8 und 10), in welchem das Trägerritzel 21 anhand der Verbindungs-Schnittstellen S₁, S₂ und S₄ zur Verbindung mit Ritzelringen 25 bis 27 sowie mit dem Ritzelcluster 18 (vgl. Fig. 12) eingerichtet ist, der Zahnspitzenkontur 30 näherungsweise parallel folgt, wie insbesondere auch aus Fig. 7, 8 sowie 10 hervorgeht.

Fig. 15 zeigt eine Ausschnittsdarstellung des Trägerritzels 21 gemäß Fig. 13 und 14. Man erkennt zunächst wieder den Verbindungsbereich V (vgl. Fig. 7, 8 und 10), in dem die Verbindungs-Schnittstellen S₁, S₂ und S₄ zur Verbindung mit den Ritzelringen 25 bis 27 sowie mit dem Ritzelcluster 18 (vgl. Fig. 12) angeordnet sind, ferner die Struktur des Trägerritzels 21, umfassend radial innere Trägerarme 35, Zwischenring 36, radial äußere Verbindungsarme 32 und 33, sowie Verzahnungsbereich 34.

Das Trägerritzel 21 nach den Ausführungsformen gemäß Fig. 7 bis 19 wird, anders als bei aus dem Stand der Technik bekannten Ritzelkassetten mit Ritzelcluster, nicht mehr auf einem vergleichsweise großen Abstützradius R₁ (vgl. Fig. 5 und 10) durch das beim Stand der Technik sehr große Ritzelcluster abgestützt, insbesondere gegen seitliches Ausknicken des Trägerritzels 21 durch beim Schräglauf der Kette vom eingelegten Gang auf dem Ritzelcluster am Hinterrad zum vorderen Kettenrad am Tretlager auftretende Kräfte in hinterachs-axialer Richtung.

Dies bedeutet, dass das Trägerritzel 21 nach den Ausführungsformen gemäß Fig. 7 bis 19 steifer ausgebildet werden muss als bekannte Trägerritzel 21 z.B. gemäß Fig. 5 und 6, insbesondere im radial äußeren Bereich des Trägerritzels 21 im Bereich der Verbindungsarme 32 und 33.

Zu diesem Zweck werden die Bereiche B₁, B₂, B₃ und B₄ des Trägerritzels 21, in welchem dieses jeweils einen Versatz in hinterachs-axialer Richtung aufweist, um die in Fig. 7 bis 12 ersichtliche toroidale Schüsselung zu erhalten, in spezieller Weise ausgebildet wie nachfolgend ausgeführt, um eine möglichst hohe Steifigkeit des Trägerritzels 21 insbesondere gegen seitliches Ausknicken zu erhalten.

Die Bereiche B₁ bis B₄ des Trägerritzels 21, in welchen jeweils ein axialer Versatz des Trägerritzels 21 stattfindet, verlaufen hierzu jeweils nicht genau entlang eines Umfangs-Teilkreises (vgl. Umfangs-Teilkreis TK in Fig. 13 und 15) des Trägerritzels 21. Stattdessen weisen die dortigen Abkantungen bzw. Versätze in hinterachs-axialer Richtung jeweils einen abknickenden Verlauf in Umfangsrichtung auf. Auf diese Weise wird der in den Bereichen B₁ bis B₄ jeweils stattfindende Knick im Verlauf der Arme 32, 33 und 35 entschärft, und der jeweilige Knickverlauf wird entlang eines größeren radialen Bereichs verteilt.

Eine zusätzliche Entschärfung der Abkantungen bzw. des jeweiligen Knicks, vorliegend zumindest in den Bereichen B₁ und B₂ erfolgt dadurch, dass die Abkantung im jeweiligen Knickbereich B₁ bzw. B₂ jeweils so flach wie möglich, bzw. in unterschiedlichen Bereichen mit unterschiedlichen Abkantungswinkeln erfolgt. Man erkennt in Fig. 15, dass die Abkantung sowohl im Knickbereich B₁ als auch im Knickbereich B₂ auf der zeichnungsbezogen rechten Seite mit einem vergleichsweise steilen Winkel α von z.B. ca. 30° erfolgt, während die jeweilige Abkantung auf der zeichnungsbezogen linken Seite mit einem vergleichsweise flachen Winkel β von beispielsweise ca. 45° vorgenommen wurde. Der steilere der beiden Winkel, beim vorliegenden Ausführungsbeispiel also der 30°-Winkel, kann auch 0° betragen, wenn das Trägerritzel 11 beispielsweise mittels Zerspanung hergestellt wird. In jedem Fall wird die Knicksteifigkeit des Trägerritzels 21 durch den vorstehend beschriebenen Einsatz unterschiedlicher Abkantungswinkel innerhalb des jeweiligen Knickbereichs B₁, bis B₄ weiter erhöht.

Im Bereich des Teilkreises TK, auf welchem sich die Bereiche B₁ befinden, werden zudem die Arme 32, 33 so geformt, dass diese dort auf unterschiedlichen hinterachsaxialen Ebenen verlaufen, wodurch die Steifigkeit des Trägerritzels 21 gegen unerwünschtes seitliches Ausknicken noch weiter maximiert wird.

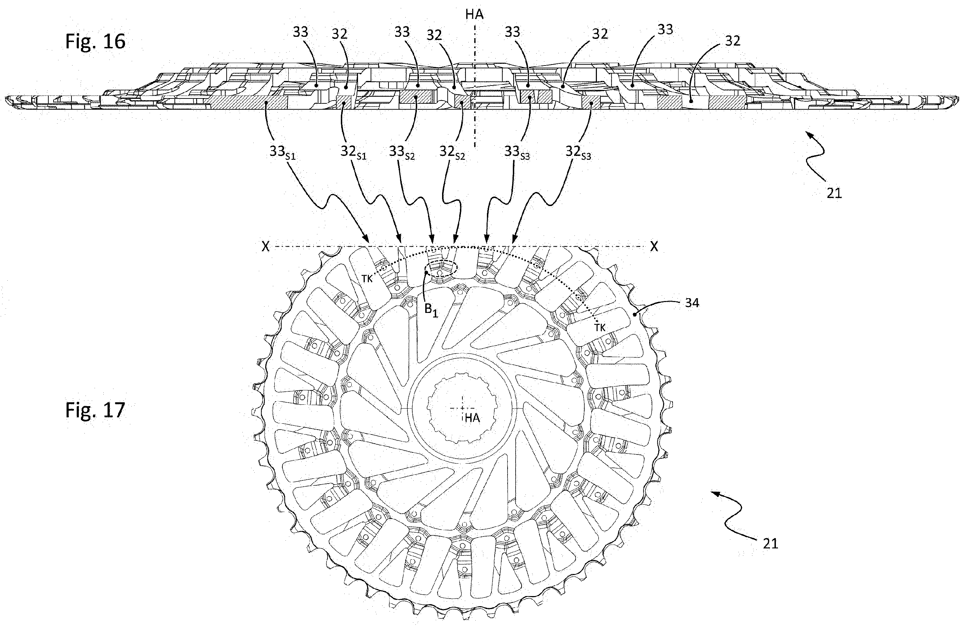

Letzteres wird insbesondere aus Fig. 16 ersichtlich. Fig. 16 zeigt einen Schnitt durch das Trägerritzel 21 nach der Ausführungsform gemäß Fig. 12 bis 15, wobei der Verlauf X-X des Schnittes in Fig. 17 durch eine strichlierte Linie dargestellt ist.

Man erkennt in Fig. 16 den Verlauf der Arme 32 und 33, welche durch den Schnitt X-X in unterschiedlicher radialer Höhe geschnitten werden. Anhand der Schnittflächen in Fig. 16 wird erkennbar, dass die Arme 32 und 33, welche im Bereich B₂ (vgl. Fig. 15) auf derselben Axialposition bezüglich der Hinterachse HA beginnen, im weiteren radialen Verlauf nach außen zunächst einen unterschiedlichen axialen Verlauf nehmen, vgl. die unterschiedliche hinterachs-axiale Position der Schnittflächen 32_{S2} und 33_{S2} bzw. der Schnittflächen 32_{S3} und 33_{S3} in hinterachs-axialer Richtung HA, bevor diese radial noch weiter außen kurz vor dem Übergang in den Verzahnungsbereich 34 wieder dieselbe Position in hinterachs-axialer Richtung HA einnehmen, siehe Schnittflächen 32_{S1} und 33_{S1} in Fig. 16.

Zusätzlich wird durch eine bereichsweise Verdrehung der Arme 32, welche in Fig. 16 anhand der Schnittfläche 32_{S2} sichtbar wird, das Flächenträgheitsmoment der Arme 32 in diesem radialen Abschnitt der Arme 32, und somit die Biege- und Knickfestigkeit des Trägerritzels 21, weiter erhöht.

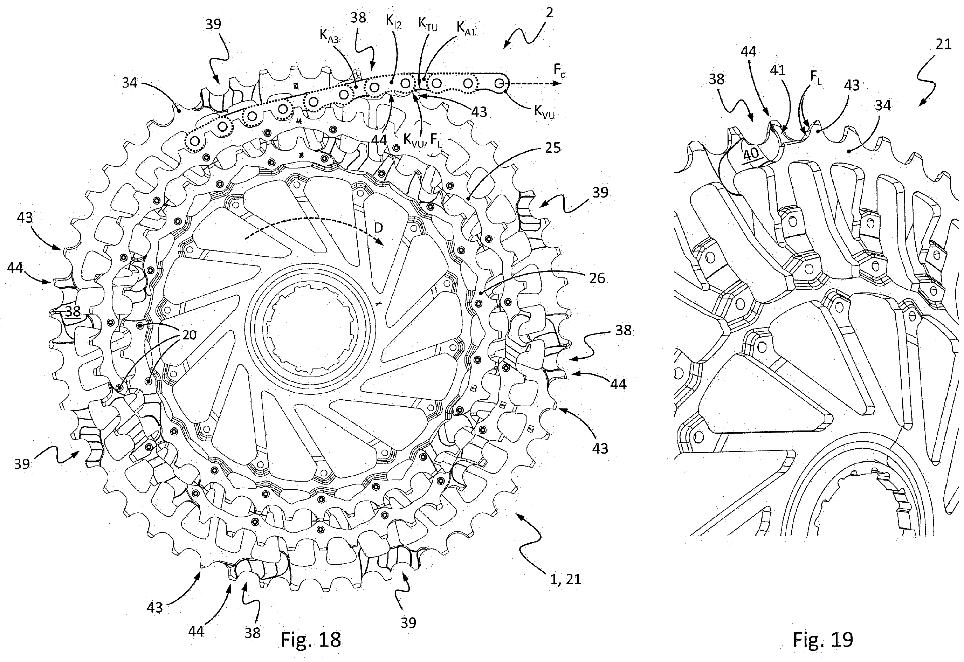

Fig. 18 zeigt das Trägerritzel 21 gemäß Figuren 13 bis 17 sowie zwei an dem Trägerritzel 21 mittels Pins bzw. Vernietung 20 befestigte Ritzelringe 25, 26. Weiterhin zeigt Fig. 18 das Lasttrum der Fahrradkette 2, welche unter der Antriebskraft Fc steht.

In Fig. 18 sind lediglich die zeichnungsbezogen hinteren Hälften der Kettenglieder, somit die inboardseitigen bzw. linken Kettenlaschen, sowie die Niete der Kette dargestellt, wohingegen die zeichnungsbezogen vorderen, also outboardseitigen bzw. rechten Kettenlaschen weggelassen sind, um den Eingriff der Kette mit der Verzahnung 34 des Trägerritzels 21 sowie mit der Verzahnung des nächstkleineren Ritzels, nämlich des Ritzelrings 25, darstellen zu können. Dabei sind die Kettenaußenlaschen K_{AL} mittels durchgezogener Linie dargestellt, während die Ketteninnenlaschen K_{IL} mittels punktierter Linie dargestellt sind.

Fig. 18 zeigt den letzten Moment des Übergangs der Kette vom Trägerritzel 21 auf den nächstkleineren Ritzelring 25 beim Outboard-Schalten, hier also vom langsamsten Gang der Ritzelkassette in den nächstschnelleren Gang. Für diesen Outboard-Schaltvorgang weist das Trägerritzel 21 spezielle Ausnehmungen bzw. Schalthilfen auf, sog. Outboard-Schaltgassen 38.

Wie insbesondere in der vergrößerten Ausschnittsdarstellung des Trägerritzels 21 in Fig. 19 erkennbar, umfassen die Outboard-Schaltgassen 38 spezifisch geformte, vertiefte Aussparungen 40 und 41, welche in der outboardseitigen Oberfläche des Trägerritzels 21 im Bereich der Verzahnung 34 angeordnet sind. Hierbei dient die Aussparung 40 beim Outboard-Schaltvorgang der Aufnahme der linken Kettenaußenlasche. In Fig. 18 ist dies die zeichnungsbezogen hintere Kettenaußenlasche K_{A3}. Die Aussparung 41 gemäß Fig. 19 dient der Aufnahme bzw. Passage der linken Ketteninnenlasche beim Outboard-Schaltvorgang. In Fig. 18 ist dies die zeichnungsbezogen hintere Ketteninnenlasche K_{I2}.

Das Trägerritzel 21 weist auf seinem Umfang vier gleichmäßig verteilte, im Wesentlichen identische Outboard-Schaltgassen 38 auf. Ferner besitzt das Trägerritzel 21 vier ebenfalls gleichmäßig entlang des Umfangs des Ritzels verteilte Inboard-Schaltgassen 39 auf, welche Schalthilfen für das (nicht dargestellte) Inboard-Schalten vom zweitgrößten Ritzel 25 auf das größte Ritzel 21 bilden.

In Fig. 18 ist erkennbar, wie die Kette beim Outboard-Schaltvorgang den in der Branche als "Tangentialbedingung" bezeichneten Idealzustand beim Schalten einnimmt, indem die Kette aus dem Verzahnungseingriff mit dem gerade zu verlassenden Ritzel (hier das größere Ritzel 21) in den Verzahnungseingriff mit dem soeben betretenen Ritzel (hier das nächstkleinere Ritzel 25) entlang einer geradlinigen Tangente an das kleinere Ritzel 15 überwechselt. Die Einhaltung dieser Tangentialbedingung ist wünschenswert und äußerst vorteilhaft, da sie ein weitgehend geräuschloses und verschleißarmes Schalten auch unter Last ermöglicht insbesondere dadurch, dass hierdurch der sog. Schaltruck minimiert oder eliminiert wird.

Der unerwünschte Schaltruck kann im letzten Moment des Verlassens der Kette von dem gerade zu verlassenden Ritzel (hier das größere Ritzel 21) entstehen, wenn die Kette zuvor nicht tangential gestreckt und gespannt wie gemäß Fig. 18, sondern in einem losen Bogen auf das gerade betretene Ritzel überläuft (hier das nächstkleinere Ritzel 25), so dass der lose Kettenbogen mit einem Ruck schlagartig gespannt wird, sobald die Kette außer Eingriff mit der Verzahnung des größeren Ritzels gelangt.

Fig. 18 zeigt den Moment des Außereingriffgelangens der Kette mit der Verzahnung des gerade zu verlassenden Ritzels 21. In diesem Moment steht die vordere Unterkante Kvu der linken Außenlasche des unter Zugspannung durch die Kettenkraft bzw. Antriebskraft Fc stehenden Lasttrums der Fahrradkette 2 gerade noch in Kontakt mit der Lastflanke F_{L} eines sog. Außenlaschen-Raumgebezahns bzw. Abgabezahns 43 des zu verlassenden Ritzels 21 (vgl. Fig. 19).

Der Außenlaschen-Raumgebezahn bzw. Abgabezahn 43 ist auf seiner zeichnungsbezogen Rückseite (Inboard-Seite) verschmälert, d.h. er weist dort eine Abflachung bzw. sog. Raumgebe-Ausnehmung auf, welche es der linken Kettenaußenlasche K_{A1} und damit der Kette 2 in diesem Bereich ermöglicht, sich beim Outboard-Schaltvorgang genügend weit nach Outboard bzw. nach rechts (zeichnungsbezogen aus der Zeichnungsebene der Fig. 18 heraus) gegenüber dem zu verlassenden Ritzel 21 zu verlagern.

Diese seitliche Verlagerung der Kette 2 im Bereich der linken Kettenaußenlasche K_{A1} bzw. im Bereich des Abgabezahns 43 ist notwendig, um die zunächst noch auf dem zu verlassenden Ritzel 21 laufende Kette 2 beim Outboard-Schaltvorgang genügend weit nach rechts, also in Outboard-Richtung auslenken zu können, damit die Kette 2 den in Drehrichtung D als nächstes folgenden Innenlaschen-Abweisezahn 44 outboard-seitig passieren und somit auf das kleinere Ritzel 25 übergehen kann. Andernfalls könnte die Kette auf den Zahnspitzen des größeren Ritzels 21 aufreiten, oder es könnte unerwünscht ein zunächst fortgesetzter Eingriff der Zähne des größeren Ritzels 11 in die Laschenzwischenräume der Kette 2 erfolgen, ohne dass das Umlegen der Kette auf das kleinere Ritzel 25 an der mittels der Outboard-Schaltgassen 38 vorgesehenen Stelle stattfindet.

Im demgegenüber der Darstellung in Fig. 18 zeitlich direkt vorangehenden Moment der Rotation der Ritzelkassette 1 bzw. des Schaltvorgangs befindet sich die linke Kettenaußenlasche K_{A1} noch links bzw. auf der Inboard-Seite, also zeichnungsbezogen hinter dem Außenlaschen-Raumgebezahn bzw. Abgabezahn 43, und gleitet im Bereich dessen dort rückseitig angeordneter Raumgebe-Ausnehmung von radial innen nach radial außen in Richtung Zahnspitze des Abgabezahns 43.

In diesem Moment bildet der reibende Kontakt zwischen der Innenseite der linken Kettenaußenlasche K_{A1} und der Rückseite des Abgabezahns 43 und/oder ein ebenfalls reibender Kontakt zwischen der vorderen Unterkante Kvu der linken Ketteninnenlasche K_{I2} und der Lastflanke F_{L} des Abgabezahns 43 (vgl. Fig. 19) den einzigen und letzten Kontakt zwischen der Kette 2 und dem zu verlassenden Ritzel 21.

Im demgegenüber der Darstellung in Fig. 18 zeitlich direkt nachfolgenden Moment der Rotation der Ritzelkassette 1 in Antriebs-Drehrichtung D endet sodann der Kontakt zwischen der Innenseite der linken Kettenaußenlasche K_{A1} und der Rückseite des Abgabezahns 43, womit das Lasttrum der Kette 2 das größere Ritzel 21 schlagartig vollständig verlässt. Hierbei vollführt das Lasttrum der Kette einen geringfügigen Sprung seitlich nach outboard, also nach rechts, und verläuft von da an sowohl in Vertikalrichtung als auch in Horizontalrichtung geradlinig vom Eingriff mit der Verzahnung des vorderen Kettenblatt in den Eingriff mit der Verzahnung des gerade betretenen Ritzels 25.

Bei diesem schlussendlichen Verlassen des größeren Ritzels 21 kann es jedoch zu einem seitlichen Gleiten oder Schaben der vorderen Unterkante Kvu der linken Ketteninnenlasche K_{I2} und/oder der unteren Taillenkante K_{TU} der linken Kettenaußenlasche K_{A1} auf der Lastflanke F_{L} des Abgabezahns 43 (vgl. Fig. 19) des zu verlassenden Ritzels 21 kommen. Dies kann bei dem ggf. unter hoher Last und damit unter hoher Kettenkraft Fc stattfindenden Schalten zu erheblicher Belastung dieser Lastflanke F_{L} führen.

Diesbezüglich haben die Erfinder erkannt, dass dieses finale Abspringen bzw. seitliche Gleiten des Lasttrums der Kette und damit der vorderen Unterkante Kvu der linken Ketteninnenlasche K_{I2} und/oder der unteren Taillenkante K_{TU} der linken Kettenaußenlasche K_{A1} auf der Lastflanke F_{L} des Abgabezahns 43 die Lastflanke F_{L} des Abgabezahns 43 sehr stark belastet bzw. verschleißt. Dies ist umso nachteiliger, als der Abgabezahn 43 zudem die rückseitige Raumgebe-Ausnehmung aufweist, welche die Stabilität des Abgabezahns 43 sowie die wirksame Breite dessen Lastflanke F_{L} weiter reduziert. Die Erfinder haben sogar ein Verbiegen des Abgabezahns 43, bei Ritzelkassetten gemäß dem Stand der Technik, aufgrund dieser speziellen Situation beim Outboard-Schalten beobachten können.

Aus diesem Grund erhält der Abgabezahn 43 bei der Ausführungsform gemäß Fig. 13 bis 19 im Bereich seiner Lastflanke F_{L} eine gegenüber der standardmäßigen Lastflanke, wie diese an den anderen Zähnen des Ritzels 21 erkennbar ist, eine in Umfangsrichtung zurückgenommene, abgeschrägte Haifischzahn-Gestalt. Besonders deutlich ist diese Formgebung der Lastflanke F_{L} des Abgabezahns 43 in Fig. 19 zu erkennen, sowie in Fig. 18 z.B. bei dem zeichnungsbezogen unten positionierten Abgabezahn 43. Mit dieser Formgebung der Lastflanke F_{L} des Abgabezahns 43 wird der Kontakt zwischen der vorderen Unterkante Kvu der linken Ketteninnenlasche K_{I2} und/oder der unteren Taillenkante K_{TU} der linken Kettenaußenlasche K_{A1} mit der Lastflanke F_{L} des Abgabezahns 43 sowie die damit verbundenen Belastungen bzw. der damit verbundene Verschleiß minimiert.

Eine derartige abgeschrägte Haifischzahn-Gestalt kann außer bei den Abgabezähnen 43 des größten Ritzels 21 auch bei einigen oder allen weiteren Ritzeln vorgesehen sein, außer beim kleinsten Ritzel, da von diesem nicht in Outboard-Richtung geschaltet wird.

Durch die abgeschrägte Haifischzahn-Gestalt des Abgabezahns 13 wird die Schaltpräzision über die gesamte Lebensdauer der Ritzelkassette 1 verbessert, Schaltgeräusche werden reduziert, der Verschleiß von Ritzelkassette 1 und Kette 2 wird verringert, und damit insgesamt die Lebensdauer und Zuverlässigkeit des Antriebsstrangs erhöht.

## Patentansprüche

1. Fahrrad-Hinterrad-Ritzelanordnung (1), umfassend ein Trägerritzel (21) und ein in einem Verbindungsbereich (V) des Trägerritzels (21) outboard-seitig mit dem Trägerritzel (21) verbundenes selbsttragendes Ritzelcluster (18, 19), wobei eine Mehrzahl als Ritzelringe (25, 26) ausgebildeter weiterer Ritzel jeweils in dem Verbindungsbereich (V) an dem Trägerritzel (21) angeordnet und jeweils in dem Verbindungsbereich (V) mit dem Trägerritzel (21) verbunden sind,
**dadurch gekennzeichnet, dass** zumindest einer der Ritzelringe (25, 26) mit einer Mehrzahl von Verbindungselementen (20) mit dem Trägerritzel (21) verbunden ist.

2. Fahrrad-Hinterrad-Ritzelanordnung (1) nach Anspruch 1,
**dadurch gekennzeichnet,**
**dass** zumindest einer der Ritzelringe (25, 26) stoffschlüssig mit dem Trägerritzel (21) verbunden ist.

3. Fahrrad-Hinterrad-Ritzelanordnung (1) nach einem der Ansprüche 1 oder 2, **dadurch gekennzeichnet,**
**dass** das Trägerritzel (21) geschüsselt ausgebildet ist dergestalt, dass in dem Verbindungsbereich (V) eine Querschnittskontur des Trägerritzels (21) einer Zahnspitzenkontur (30) der Ritzelanordnung (1) näherungsweise parallel folgt.

4. Fahrrad-Hinterrad-Ritzelanordnung (1) nach einem der Ansprüche 1 bis 3, **dadurch gekennzeichnet,**
**dass** an einem oder mehreren Ritzeln (21, 25, 26, 18) die Lastflanke F_{L} zumindest eines Außenlaschen-Raumgebezahns bzw. Abgabezahns (43) eine in Umfangsrichtung zurückgenommene, abgeschrägte Haifischzahn-Gestalt zur Verschleißreduktion beim Outboard-Schalten aufweist.

5. Baukastensystem zur Erzeugung unterschiedlicher Fahrrad-Hinterrad-Ritzelanordnungen (1) nach einem der Ansprüche 1 bis 4,
das Baukastensystem umfassend zumindest eine Baugruppenserie für zumindest eine der Baugruppen "Trägerritzel", "Ritzelcluster" und "Ritzelringe", wobei innerhalb jeder Baugruppenserie Verbindungs-Schnittstellen (S₁ - Sₙ) formkorrespondierend einheitlich definiert sind dergestalt, dass zumindest eine Baugruppe, unter Beibehaltung der übrigen Baugruppen, gegen eine andere Baugruppe aus derselben Baugruppenserie aus anderem Material oder von anderer Fertigungsqualität austauschbar ist.

6. Baukastensystem nach Anspruch 5,
**dadurch gekennzeichnet,**
**dass** zumindest eine Verbindungs-Schnittstelle (S₃) des Trägerritzels (21) als Kombinations-Schnittstelle zur wahlweisen Aufnahme eines Ritzelrings (27) oder eines Ritzelclusters (18, 19) ausgebildet ist.

## Claims

1. Bicycle rear wheel sprocket arrangement (1), comprising a carrier sprocket (21) and a self-supporting sprocket cluster (18, 19) connected to the carrier sprocket (21) on the outboard side in a connection region (V) of the carrier sprocket (21), wherein a plurality of further sprockets which are designed as sprocket rings (25, 26) are each arranged on the carrier sprocket (21) in the connection region (V) and are each connected to the carrier sprocket (21) in the connection region (V), **characterized in that** at least one of the sprocket rings (25, 26) is connected to the carrier sprocket (21) by a plurality of connecting elements (20).

2. Bicycle rear wheel sprocket arrangement (1) according to Claim 1,
**characterized**
**in that** at least one of the sprocket rings (25, 26) is connected to the carrier sprocket (21) in an integrally bonded manner.

3. Bicycle rear wheel sprocket arrangement (1) according to either of Claims 1 and 2,
**characterized**
**in that** the carrier sprocket (21) has a dished design in such a way that, in the connection region (V), a cross-sectional contour of the carrier sprocket (21) follows a tooth tip contour (30) of the sprocket arrangement (1) approximately parallel.

4. Bicycle rear wheel sprocket arrangement (1) according to one of Claims 1 to 3,
**characterized**
**in that**, on one or more sprockets (21, 25, 26, 18), the load flank F_{L} of at least one outer link plate clearance tooth or release tooth (43) has, set back in the circumferential direction, a bevelled shark tooth shape for wear reduction during outboard shifting.

5. Modular system for producing different bicycle rear wheel sprocket arrangements (1) according to one of Claims 1 to 4,
the modular system comprising at least one assembly series for at least one of the "carrier sprocket", "sprocket cluster" and "sprocket rings" assemblies, wherein connection interfaces (S₁ - Sₙ) are uniformly defined in a shape-corresponding manner within each assembly series in such a way that at least one assembly, while maintaining the other assemblies, can be exchanged for another assembly from the same assembly series of different material or of different manufacturing quality.

6. Modular system according to Claim 5,
**characterized**
**in that** at least one connection interface (S₃) of the carrier sprocket (21) is designed as a combination interface for selectively receiving a sprocket ring (27) or a sprocket cluster (18, 19).

## Revendications

1. Agencement de pignon de roue arrière de bicyclette (1), comprenant un pignon support (21) et un groupe de pignons autoportant (18, 19) relié au pignon support (21) dans une zone de liaison (V) du pignon support (21) du côté extérieur, une pluralité d'autres pignons réalisés sous forme d'anneaux de pignon (25, 26) étant agencés respectivement dans la zone de liaison (V) sur le pignon support (21) et étant reliés respectivement dans la zone de liaison (V) au pignon support (21),
**caractérisé en ce qu'**au moins l'un des anneaux de pignon (25, 26) est relié au pignon support (21) par une pluralité d'éléments de liaison (20).

2. Agencement de pignon de roue arrière de bicyclette (1) selon la revendication 1,
**caractérisé en ce**
**qu'**au moins l'un des anneaux de pignon (25, 26) est relié au pignon support (21) par liaison de matière.

3. Agencement de pignon de roue arrière de bicyclette (1) selon l'une quelconque des revendications 1 ou 2, **caractérisé en ce que**
le pignon support (21) est configuré en cuvette de telle sorte que, dans la zone de liaison (V), un contour de section transversale du pignon support (21) suit approximativement parallèlement un contour de pointe de dent (30) de l'agencement de pignon (1).

4. Agencement de pignon de roue arrière de bicyclette (1) selon l'une quelconque des revendications 1 à 3, **caractérisé en ce que**
sur un ou plusieurs pignons (21, 25, 26, 18), le flanc de charge F_{L} d'au moins une dent d'espace ou dent de sortie de la patte extérieure (43) présente une forme de dent de requin biseautée, en retrait dans la direction circonférentielle, pour réduire l'usure lors du changement de vitesse extérieur.

5. Système modulaire pour la production de différents agencements de pignon de roue arrière de bicyclette (1) selon l'une quelconque des revendications 1 à 4, le système modulaire comprenant au moins une série d'ensembles pour au moins l'un des ensembles « pignons support », « groupes de pignons » et « anneaux de pignons », dans chaque série d'ensembles, des interfaces de connexion (Si-Sₙ) étant définies de manière uniforme en correspondance de forme, de telle sorte qu'au moins un ensemble, tout en conservant les autres ensembles, est interchangeable avec un autre ensemble de la même série d'ensembles, en un autre matériau ou d'une autre qualité de fabrication.

6. Système modulaire selon la revendication 5,
**caractérisé en ce**
**qu'**au moins une interface de liaison (S₃) du pignon support (21) est réalisée sous forme d'interface combinée pour recevoir au choix un anneau de pignon (27) ou un groupe de pignons (18, 19).
